# EUROPÄISCHE PATENTANMELDUNG

(11) **EP 1 286 076 A1**
(43) Veröffentlichungstag der Anmeldung: **26.02.2003**
(21) Anmeldenummer: 02018507.0
(22) Anmeldetag: 16.08.2002
(51) Int. Cl.: F16F 7/104

(54) **Einstellbarer Lineartilger**

(30) Priorität: 20.08.2001 EP 01120007
(71) Anmelder: Mitsch, Franz, 64646 Heppenheim (DE)
(72) Erfinder: Mitsch, Franz, 64646 Heppenheim (DE)
(74) Vertreter: Benz, Jürgen, Dr.

(57) **Zusammenfassung**

Die Erfindung betrifft einen linearen Schwingungstilger mit variabler Federsteifigkeit, welcher Schwingungen, die von Maschinen oder Bauteilen jeglicher Art erzeugt werden, in vorzugsweise einer (linearen) Richtung zu reduzieren oder zu kompensieren vermag. Der erfindungsgemäße Tilger kann entsprechend den Eigenschaften des Schwingungen erzeugenden Systems stufenlos eingestellt und somit an das System angepasst werden.

## Beschreibung

Die Erfindung betrifft einen Schwingungstilger, welcher Schwingungen, die von Maschinen oder Bauteilen jeglicher Art erzeugt werden, in vorzugsweise einer (linearen) Richtung zu reduzieren oder zu kompensieren vermag. Der erfindungsgemäße Tilger kann entsprechend den Eigenschaften des Schwingungen erzeugenden Systems stufenlos eingestellt und somit an das System angepasst werden. Die Erfindung betrifft auch Kombinationen von entsprechenden Tilgern (Stapel-Tilger), die Schwingungen in gleicher oder verschiedener Richtungen dämpfen können, und so bei speziellen Schwingungsproblemen eingesetzt werden können.
Der stufenlos einstellbare Lineartilger gemäß der vorliegenden Erfindung stellt eine Neuerung und Bereicherung des Standes der Technik dar, wobei insbesondere die Art der Umsetzung der Steifigkeitsvariationen des Tilgers neuartig ist.

Die theoretischen Grundlagen eines Schwingungstilgers sind prinzipiell bekannt und sind in der einschlägigen Literatur zur Schwingungslehre umfassend dargestellt.
Das Prinzip des Schwingungstilger wird seit langer Zeit auch technisch genutzt, so z.B. in der Form des Turmtilgers oder des Torsionstilgers im Motorbau.

Schwingungstilger müssen auf die Frequenz des zu tilgenden Bauteiles abgestimmt werden. Die Abstimmung der Tilgerfrequenz kann zum einen durch die Änderung der Steifigkeit der eingesetzten Federelemente, zum anderen durch Änderung der Tilgermasse erfolgen. Da die Tilgermasse eine für die Tilgung des Systems festgelegte Mindestmasse nicht unterschreiten sollte und größere Massen unnötig Platz erfordern und Kosten verursachen, bleibt für die Einstellung der Tilgerfrequenz die Variation der Federsteifigkeit.

Dies kann durch die Auswahl und Kombination unterschiedlich steifer Federelemente erfolgen. In der Regel ist dies mit einem hohem Aufwand verbunden, für jede zu tilgende Frequenz ein passendes Federelement zu entwerfen beziehungsweise zu entwickeln oder aus einer vorhandenen Sammlung auszuwählen und jeden Tilger für eine ganz bestimmte Tilgerfrequenz zu montieren. Deshalb besitzt ein Tilger mit einer in bestimmten Grenzen frei einstellbaren Federsteifigkeit einen erheblichen Vorteil, sowohl von der Komplexität einer Lagerhaltung für viele verschiedene Federtypen her, als im besonderen auch bezüglich der Flexibilität beim Einsatz des Tilgers.

So kann ein Tilger an eine zu beruhigende Maschine appliziert und dann vor Ort direkt der Tilger optimal eingestellt werden. Kleine Änderungen an einer zu tilgenden Maschine, welche in der Praxis immer wieder vorkommen, sei es durch optimierte Bauteile, neue Motoren, Getriebe oder ähnlichem, führen im allgemeinen über eine Massen- oder Steifigkeitsänderung (z.B. dünnere Wandungen / Verrippungen ) immer zu einer Änderung des Schwingverhaltens einer Maschine. Diese veränderten Frequenzen zu tilgen, müsste über einen Austausch der Federelemente am vorhandenen Tilger erfolgen, was mit hohem Aufwand verbunden wäre.

Es bestand somit die Aufgabe, einen Tilger zur Verfügung zu stellen, der die genannten Nachteile nicht aufweist.

Ein einstellbarer Tilger gemäß der vorliegenden Erfindung wird über die Veränderung der Vorspannung seiner Federelemente über Verschraubung oder hydraulisch oder pneumatisch oder elektromagnetisch oder einen elektrischen Stellantrieb einer neuen zu tilgenden Frequenz mit relativ geringem Aufwand, gegebenenfalls sogar selbst regelnd mit Hilfe einer Regelelektronik, angepasst.

Des weiteren ist der erfindungsgemäße Tilger für den schnellen Einsatz ohne sehr genaue Schwingungsanalysen an einer Maschine im Vorfeld applizierbar; über eine Einstellung des Tilgers vor Ort kann der Bereich der optimalen Wirkung leicht gefunden werden.

Die Erfindung betrifft somit:
- Einen Lineartilger mit variabler Federsteifigkeit zum Reduzieren oder Kompensieren von Schwingungen, welche von Maschinen oder Bauteilen erzeugt werden, bestehend im wesentlichen aus einem Befestigungselement (2), Befestigungsmitteln (5), einer oder mehreren Tilgermassen (1) und Federelementen (3), wobei Befestigungselement und Tilgermasse über mindestens ein Federelement miteinander verbunden sind, dadurch gekennzeichnet, dass die Flächen mit denen die Federelemente mit der Tilgermasse und dem Befestigungselement in Kontakt stehen, konusförmig oder sphärisch ausgebildet sind und einen Winkel (α) mit der Achse (a) des Tilgers bilden, wobei besagte Federelemente (3) durch Vorspannmittel (4) vorgespannt sind und somit eine auf das Schwingungssystem angepasste Federsteifigkeit besitzen.
- Einen entsprechender Lineartilger, der dadurch gekennzeichnet ist, dass die Federelemente (3) Elastomerschichten sind.
- Einen entsprechender Lineartilger, der dadurch gekennzeichnet ist, dass der Winkel (α) 2° bis 45° beträgt zur Dämpfung von Schwingungen, welche im wesentlichen in Richtung der Achse (a) auftreten (Axialtilger).
- Einen entsprechender Lineartilger, der dadurch gekennzeichnet ist, dass der Winkel (α) 5° bis 30° beträgt, vorzugsweise 10° bis 20° beträgt.
- Einen entsprechender Lineartilger, der dadurch gekennzeichnet ist, dass der Winkel (α) 45° bis 98°, vorzugsweise 70 bis 95°, insbesondere 80 bis 85° beträgt bei der Dämpfung von Schwingungen, welche im wesentlichen senkrecht zur Achse (a) auftreten (Radialtilger).
- Einen entsprechender Lineartilger, der dadurch gekennzeichnet ist, dass die Flächen mit denen die Federelemente (3) mit der Tilgermasse (1) und dem Befestigungselement (2) in Kontakt stehen, konusförmig angeordnet sind.
- Einen entsprechender Lineartilger, der dadurch gekennzeichnet ist, dass die Konstruktion des Tilgers so ausgeführt ist, dass die Konusöffnung zur Achse (a) hinweist.
- Einen entsprechender Lineartilger, der dadurch gekennzeichnet ist, dass Befestigungselement (2) und Tilgermasse (1) zylindrisch geformte Teile sind.
- Einen entsprechender Lineartilger, der dadurch gekennzeichnet ist, dass die Tilgermasse (1) hinter dem Befestigungselement (2) in Verlängerung der Achse (a) angebracht ist.
- Einen entsprechender Lineartilger, der dadurch gekennzeichnet ist, dass die Tilgermasse (1) sowie die Federelemente (3) in Verlängerung des Befestigungselementes (2) senkrecht zur Achse (a) angebracht sind.
- Einen Stapel - Tilger, bestehend aus zwei oder mehreren in Richtung der Achse (a) hintereinander angeordneten entsprechenden Lineartilgern.
- Einen entsprechender Stapel - Tilger, der dadurch gekennzeichnet ist, dass er mindestens zwei gleichartige Lineartilger aufweist.
- Einen entsprechender Stapel - Tilger, bestehend aus zwei oder mehreren entsprechenden Axialtilgern.
- Einen entsprechender Stapel - Tilger, bestehend aus zwei oder mehreren entsprechenden Radialtilgern.
- Einen entsprechender Stapel-Tilger, der mindestens zwei verschiedenartige Lineartilger afweist.
- Einen entsprechender Stapel-Tilger, bestehend aus mindestens einem Axialtilger und einem Radialtilger, wie beschrieben.
- Die Verwendung eines entsprechenden Lineartilgers zur Reduzierung oder Kompensierung von Schwingungen, die durch Getriebe oder Antriebsaggregate erzeugt werden.

Oben und im folgenden werden die folgenden Bezugsgrößen verwendet:

| Pos | Beschreibung/Funktion |
|---|---|
| (1) | Tilgermasse |
| (2) | Befestigungselement (Tilgerträger) |
| (3) | Federelement (Elastomerfeder) |
| (4) | Mittel zur Einstellung der Vorspannung |
| (5) | Mittel zur Befestigung des Tilgerträgers |
| (6) | Federelemente in den Abb. 7 u. 8 |
| (7) | Druckkammer bei hydraulischer oder pneumatischer Vorspannung |
| (8) | Zuführung des Druckmittels |
| (9) | Montageverschraubung |

Unter dem Begriff "Lineartilger" versteht man dabei erfindungsgemäß einen entsprechenden Schwingungstilger, welcher im Gegensatz zu Torsionstilgern, die durch drehende Teile erzeugte Torsions-Schwingungen zu tilgen vermögen, Schwingungen, die in einer oder mehreren Richtungen (Ebenen) wirken, reduzieren oder kompensieren können.

Erfindungsgemäß ist der Begriff "Feder" in seiner weitesten Bedeutung zu verstehen. Eingeschlossen sind in diesen Begriff alle solche Bauelemente, die vorrangig aufgrund ihrer federnden und elastischen Funktion eingesetzt werden können. Der Bergriff Feder umschließt also erfindungsgemäß Werkteile wie Spiralfedern, Biegestäbe, Blattfedern, Elastomere, Drahtseilfedern und ähnliches. Als Federelemente gemäß der Erfindung sind prinzipiell alle Bauteile, bzw. Materialien zu verstehen, welche federnde Eigenschaften besitzen, insbesondere ein Elastizitätsmodul aufweisen. Die Federwirkung kann durch die Materialeigenschaften selbst eintreten wie bei Elastomersschichten aus natürlichen oder synthetischen Kautschuken bzw. Gummis oder elastischen anderweitigen Kunststoffen. Generell können auch klassische Federsysteme, wie z.B. Blatt-, und Schraubenfedern Einsatz finden, jedoch sind Elastomerfedersysteme erfindungsgemäß bevorzugt.

Gegenstand der Erfindung ist somit insbesondere ein Lineartilger, welcher Elastomerschichten als Federelemente enthält.

Die erfindungsgemäßen Elastomerschichten (3) bestehen im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 30 bis 80 Shore verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpro-pylen-, Nitril-, Polyurethan-, Acrylat-, Äthylenacrylat, Silicon- oder Fluor- Kautschuke bzw. Kunststoffe.

Das Befestigungselement (2) oder auch Tilgerträger ist einerseits mit der Tilgermasse oder den Tilgermassen (1) über die besagten Federlemente verbunden, andrerseits mit dem zu dämpfenden System, also der schwingenden Maschine, dem schwingenden Getriebe usw. Die Verbindung mit dem zu dämpfenden Bauteil erfolgt dabei über die Befestigungsmittel (5), welche in einfachsten Fall passende Schrauben sind, andere gleich wirkende Befestigungsmittel werden erfindungsgemäß jedoch mit umfasst. Befestigungselement und Tilgermasse bilden erfindungsgemäß eine bauliche Einheit, wobei die Befestigung am zu dämpfenden Teil in der Weise zu erfolgen hat, dass Schwingungsrichtung der Tilgermasse und Hauptschwingungsrichtung des schwingenden Systems weitgehend identisch sein sollte. Die gesamte Tilgereinheit kann auch mit einer Verkleidung oder einem Gehäuse versehen sein.

Wie bereits erwähnt, sind Tilgerträger und Tilgermasse(n) über die Federelastomere (3) mit einander verbunden, die ein Schwingen der Tilgermasse in gleicher Frequenz aber in gegensätzlicher Richtung zur erzeugenden Schwingung ermöglicht. Die elastomeren Schichten befinden sich auf den eigens vorgesehen Flächen am Tilgerträger bzw. an der Tilgermasse, die vorzugsweise konisch oder sphärisch ausgebildet sind und einen Winkel α mit der Achse (a) des Tilgers bilden. Die Wahl der Dicke und Größe der Elastomerflächen bestimmen zusammen mit der Größe der Tilgermasse in erster Nährung das Dämpfungsverhalten des Tilgers im Zusammenspiel mit den schwingungstechnischen und baulichen Eigenschaften bzw. Erfordernissen des Gesamtsystems.
Die Feinabstimmung auf das Schwingungssystem erfolgt durch die Vorspannung der besagten Elastomerschichten mittels der Vorspannelemente (4), welche in einfachen Fällen durch Schrauben, Klammern oder anderer gleich wirkender Mittel, in besonderen Fällen aber auch durch pneumatische oder hydraulische Mittel gebildet werden können, wie dies in einigen besonderen Ausführungsformen der Abbildungen dargestellt ist.
Beim Vorspannen werden Tilgermasse (1) und Tilgerträger (2) durch die Vorspannmittel (4) gegeneinander gepresst, wobei die Feder- bzw. Elastomerelemente (3) zusammengepresst bzw. verdichtet werden. Je mehr die Elstomerelemente verdichtet werden, desto größere Steifigkeit des Federsystems tritt ein. Größere Steifigkeiten sind zur Dämpfung von höheren Schwingungsfrequenzen geeignet, während weiche Federsysteme bei mit niederer Frequenz schwingenden Bauteilen eingesetzt werden können. Dieses Vorspannen der Elastomerelemente erfolgt erfindungsgemäß stufenlos, und es ist damit möglich, einen in jeglicher Hinsicht optimal eingestellten Tilger für ein spezielles Schwingungsproblem eines Bauteils oder einer Maschine zur Verfügung zu stellen.
Der erfindungsgemäße Tilger hat eine im wesentlichen kreisförmige Grundfläche, ist also im wesentlichen von zylindrischer Gestalt. Prinzipiell sind auch von der Kreis- bzw. Zylinderform abweichende Tilger geeignet. So können auch Tilger mit mehreckiger, beispielsweise vier-, fünf-, oder sechseckiger Grund- oder Basisfläche eingesetzt werden. Gegenstand der Erfindung ist somit insbesondere ein entsprechender Lineartilger, der dadurch gekennzeichnet ist, dass Befestigungselement (2) und Tilgermasse (1) zylindrisch geformte Teile sind.

Erfindungswesentlich ist es, dass der Winkel (α) Werte zwischen größer Null und kleiner 90° einnimmt, wobei für einen Axialtilger die Werte zwischen 2° und 45° liegen müssen und für einen Radialtilger zwischen 45° und 98°. Der Winkel (α) wird dabei von der Neigung einer der konischen oder sphärisch ausgebildeten Kontaktflächen der betreffenden Tilgerbefestigung / Tilgermasse / Elastomerschicht und der Tilgerachse (a) gebildet.

Gegenstand der Erfindung ist somit ein Lineartilger, welcher dadurch gekennzeichnet ist, dass der Winkel (α) 2° bis 45° beträgt (Axialtilger). Vorzugsweise werden entsprechende Axialtilger verwendet, bei denen der Winkel (α) 5° bis 30°, insbesondere 10° bis 20° beträgt.

Die Tilgerachse (a) ist definitionsgemäß die Achse des Tilgers, welche senkrecht und mittig bzw. zentrisch zur kreisförmigen oder eckigen Grundfläche des Tilgerträgers oder der Tilgermasse ausgerichtet ist. In besonderen bevorzugten Ausführungs-formen der Erfindung ist die Achse (a) identisch mit der gedachten Achse einer zentrischen Bohrung bei vorzugsweise zylindrischen Tilgern, so dass der Tilger beispielsweise direkt auf eine zu dämpfende Getriebe- oder Antriebswelle aufgesteckt werden kann. In diesen in der Praxis einfach herzustellenden Ausführungsformen bilden Tilgerträger und Tilgermasse(n) zentrische kreisförmige Scheiben, die entsprechend den geforderten Eigenschaften unterschiedlich dick sein können.

Ein Axialtilger ist somit erfindungsgemäß ein Tilger, bei dem Tilgermasse / Tilgerträger /Federelemente so angeordnet sind, dass die Hauptrichtung der zu dämpfenden Schwingung der Richtung der Achse (a) des Tilgers entspricht.

Gegenstand der Erfindung ist auch ein Lineartilger, welcher dadurch gekennzeichnet ist, dass der Winkel (α) 45° bis 98° beträgt (Radialtilger). Vorzugsweise werden entsprechende Radialtilger verwendet, bei denen der Winkel (α) 70° bis 95°, insbesondere 80° bis 85° beträgt.
Ein Radialtilger ist erfindungsgemäß ein Tilger, bei dem Tilgermasse / Tilgerträger /Federelemente so angeordnet sind, dass die Hauptrichtung der zu dämpfenden Schwingung sich senkrecht zur Achse (a) des Tilgers befindet.

Wie bereits erwähnt, sind die Flächen, mit denen die Federelemente mit der Tilgermasse und dem Befestigungselement in Kontakt stehen, konusförmig oder sphärisch ausgebildet. Die Öffnung des Konus bzw. der sphärischen Fläche kann nach beiden Seiten erfolgen, vorzugsweise ist die Konstruktion des Tilgers so ausgeführt, dass die Öffnung zur Achse (a) hinweist.

Tilgerträger (2) und Tilgermasse (1) können in zwei prinzipiellen räumlichen Anordnungen zueinander stehen. Gegenstand der Erfindung ist somit ein
Lineartilger, bei dem die Tilgermasse (1) hinter dem Befestigungs- /Trägerelement (2) in Verlängerung der Achse (a) angebracht ist.

Gegenstand der Erfindung ist aber auch ein entsprechender Lineartilger, bei dem die Tilgermasse (1) sowie die Federelemente (3) in Verlängerung des Befestigungselementes (2) senkrecht zur Achse (a) angebracht sind. Diese Anordnung ermöglicht das Hintereinanderschalten bzw. Stapeln von mehreren Tilgerelementen, die ggf. unterschiedliche Schwingungseigenschaften haben können.
Somit ist Gegenstand der Erfindung ein Stapel - Tilger, bestehend aus zwei oder mehreren in Richtung der Achse (a) hintereinander angeordneten entsprechenden Lineartilgern. Durch derartige Stapeltilger kann bei Bedarf der Gesamteffekt verstärkt oder modifiziert werden, wodurch eine größere Variabilität und Anpassungsfähigkeit an die vorliegenden zu dämpfenden Systeme erreicht werden kann.

So ist es auch möglich nicht nur gleichartige Tilgerelemente, wie beispielsweise Axial- oder Radialtilger zu einer Gesamt - Tilgereinheit zu kombinieren, sondern auch Axial- und Radialtilgerelemente, wodurch selbst komplexere Schwingungssysteme erfolgreich entkoppelt werden können.

Gegenstand der Erfindung ist somit ein Stapel - Tilger, bestehend aus zwei oder mehreren entsprechenden Axialtilgern oder alternativ aus zwei oder mehreren entsprechenden Radialtilgern oder aber aus mindestens zwei verschiedenartigen Lineartilgern, also mindestens einem Axial- und mindestens einem Radialtilger.

Die erfindungsgemäßen Lineartilger eigenen sich insbesondere zur Reduzierung oder Kompensierung von Schwingungen, die durch Getriebe oder Antriebsaggregate jeglicher Art erzeugt werden.

Im folgenden wird der erfindungsgemäße Lineartilger im Detail beschrieben.

| Bild | |
|---|---|
| **1** | Axialtilger mit langer Masse ,konischen Elastomerfedern in X-Anordnung |
| **2** | Axialtilger mit langer Masse ,konischen Elastomerfedern in O-Anordnung |
| **3** | Axialtilger mit kurzer Masse ,konischen Elastomerfedern in O-Anordnung |
| **4** | Axialtilger mit sphärischen Elastomerfedern |
| **5** | In der Ebene Z-Y wirkender einstellbarer Radialtilger |
| **6** | Tilger nach Bild 5 eingesetzt zur Tilgung von Getriebeschwingungen |
| **7** | Pneumatisch einstellbarer Lineartilger |
| **8** | Hydraulisch einstellbarer Lineartilger |

Der Tilger besteht aus einer oder mehreren Massen 1, einem Befestigungselement 2 und einer oder mehrerer konisch angeordneter Elastomer- Federn. Dabei kann die konische Elastomerfeder 3 wie in Bild 1 gezeigt X- förmig oder wie in Bild 2 gezeigt, O - förmig angeordnet werden. Auch ein Kombination aus X- und O- Form ist möglich.

Die Masse 1 kann wie in Bild 1 und 2 gezeigt eine nahezu beliebige Länge aufzeigen. Sie kann aber auch wie in Bild 3 gezeigt die Länge des Tilgerträgers aufweisen.

Die Einstellung der Eigenfrequenz erfolgt über die einstellbaren Elastomerbauteile die durch die Einstellschraube (4 ) mehr -oder weniger stark vorgespannt werden.

Mit der (den) Befestigungsschraube (5) wird der Tilger an der zu tilgenden Maschine oder Einrichtung befestigt.

Als Federelement dienen elastomere Werkstoffe wie Naturkautschuk, synthetische Kautschuke wie NBR, AEM, SBR, etc. und Verschnitte derselben. Diese Werkstoffe besitzen eine Eigendämpfung, welche für die Funktion des Tilgers von Vorteil sind.

Der Werkstoff wird verspannt zwischen der Tilgermasse (1) und dem Tilgerträger (2), welcher an das zu tilgende Bauteil mittels der Befestigungsschrauben (5) appliziert wird, und zwar als Streifen oder als Profil, welcher an diesen anvulkanisiert, eingeklebt, nur geklemmt oder eine Kombination aus zwei genannten Möglichkeiten ist.
Des weiteren werden wie in Bild 4 dargestellt, sphärische Elastomerlager (6) eingeklemmt, verklebt oder eingepresst und zwischen der (n) Tilgermasse(n) 1 und Tilgerträger 2 vorgespannt.
Die Variation der Vorspannung kann des weiteren in gezeigter Weise pneumatisch, hydraulisch, elektromotorisch oder elektromagnetisch erfolgen. Über eine Regeltechnik der Tilger den jeweiligen Erfordernissen kontinuierliche angepasst (geregelt) werden.

Der pneumatische einstellbare Tilger nach Bild 7 wird wie folgt eingestellt:
Der Pneumatik Druckraum (7) wird mit einem Druck beaufschlagt. Dadurch wird die Elastomerfeder (3) mehr - oder weniger stark vorgespannt. Durch die Änderung der Vorspannung ändert sich die Steifigkeit und damit die Eigenfrequenz des Tilgers.
Der hydraulisch einstellbare Tilger nach Bild 8 wird in ähnlicher Weise wie der pneumatisch einstellbare Tilger eingestellt. Jedoch wird in dem Hydraulik Druckraum eine Flüssigkeit eingebracht. Gleichzeitig ist aufgrund der fehlenden Kompressibilität der Flüssigkeit ein zweites Federelement erforderlich.

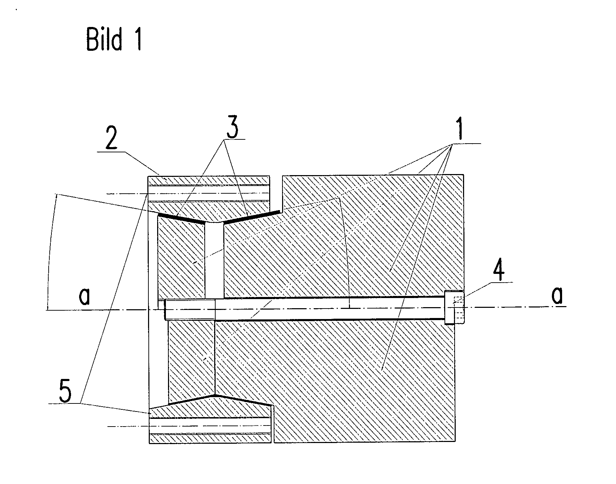

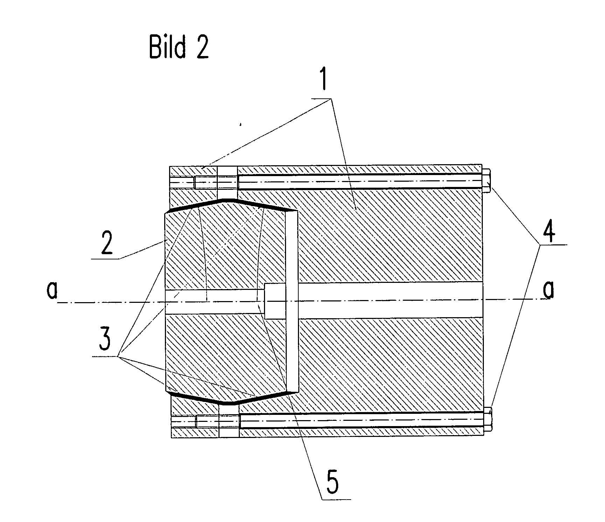

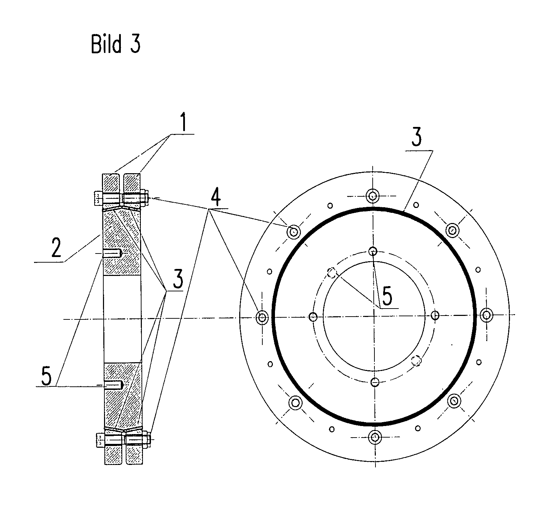

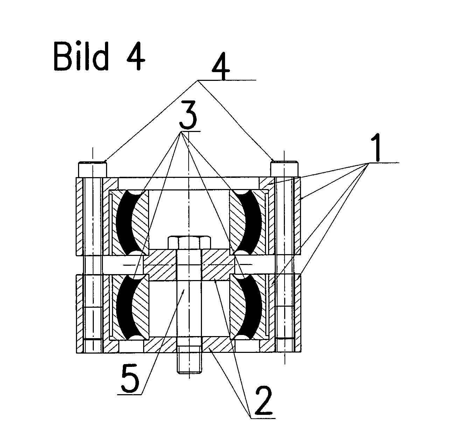

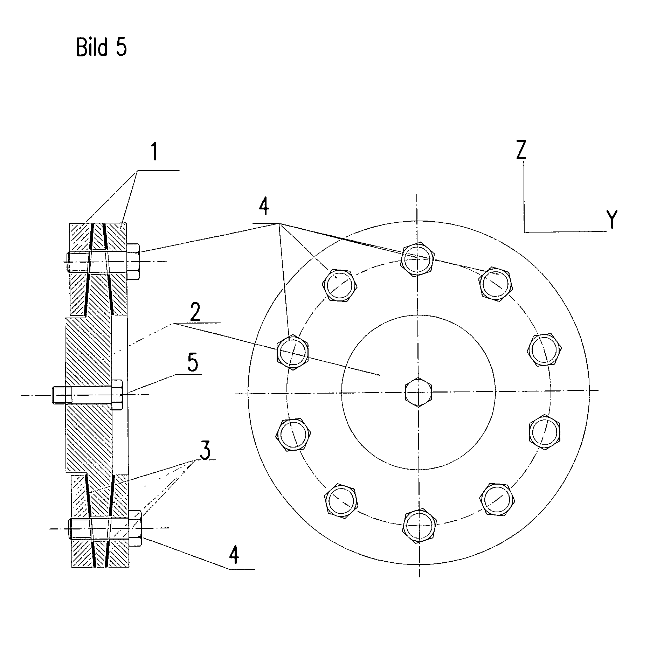

Während die bisher aufgezeigten Tilger in nur einer (axialen) Richtung arbeiten,
wirkt der in Abbildung 5 dargestellte Tilger in der Z-Y- Ebene. Dieser Tilger hat deutlich flacher eingestellte Federelemente, so dass die Elastomerbauteile in Schubrichtung , d.h. radial schwingen und solche in radialer Richtung auftretende Schwingungen tilgt.

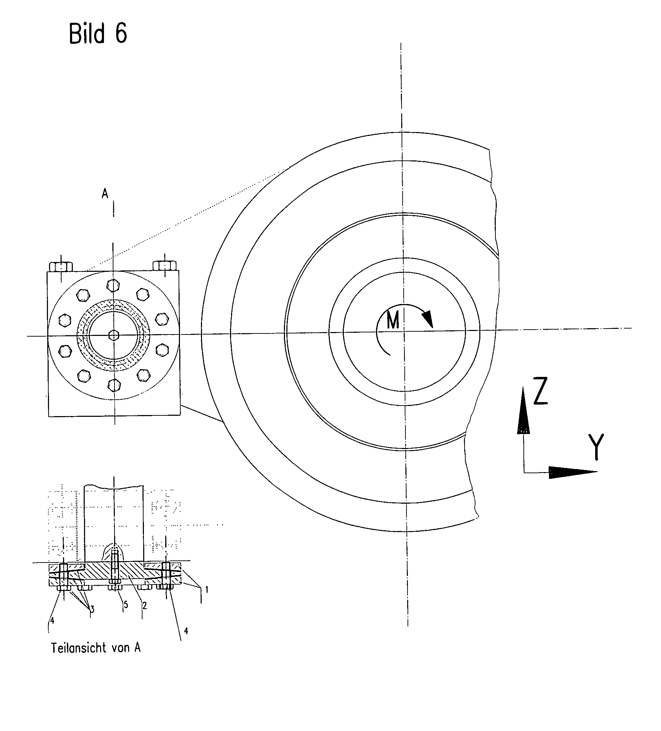

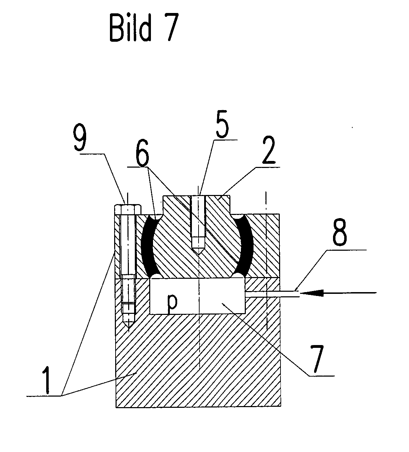

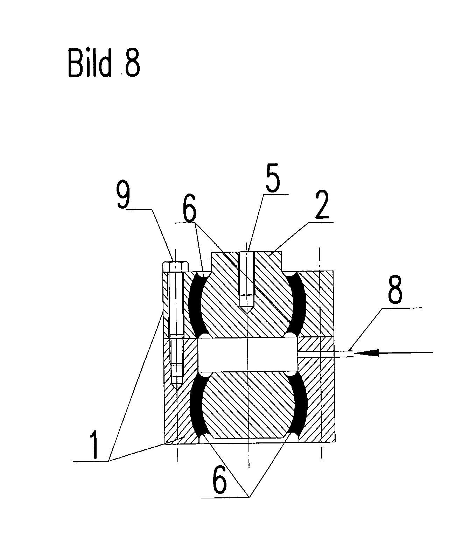

Abbildung 6 zeigt diesen Tilger an ein Windkraftanlagen Getriebe montiert. Dort dient er zur Reduzierung von Schwingungen in x-Y-Richtung, welche durch die Zahnräder verursacht werden. Er ist im Frequenzbereich zwischen 50 Hz und 800 Hz einstellbar.

Der erfindungsgemäße Tilger kann in verschiedenen Größen eingesetzt werden.

Miniaturform: Tilgermasse von wenigen Gramm bis 1 kg
Denkbare Einsatzgebiete: Werkzeugaufnahme von Dreh-, Fräs- und Bearbeitungszentren, Kleingetriebe(-gehäuse), Kolbenpumpen, Nadeldrucker, Prüfstände. Z. B. wird ein Dreheisen über die Drehzahl des eingespannten Drehteils und die Spankräfte in seiner Eigenform oder einer harmonischen davon angeregt und pfeift. Über Änderungen der Einspannlänge oder der Werkzeugform ist die störende Eigenfrequenz variabel. Ein stufenlos einstellbarer Lineartilger schafft hier Abhilfe, da er jeder Frequenz angepasst werden kann.

Kleine und mittlere Form: Tilgermasse von 1 kg bis 250 kg
Denkbare Einsatzgebiete: Bearbeitungszentren/Werkzeugmaschinen (s.o. und am Maschinenrahmen/Schlitten/Spindel etc.), Getriebe(-gehäuse), Hydraulik-pumpen /Kolbenpumpen, Textilmaschinen, Stanzen, Nietmaschinen, Verbrennungsmotoren, Getränkeabfüllanlagen, motorisch betriebene Prüfstände,

Große Bauform: Tilgermasse 250kg bis 5000kg
Großgetriebe, Motoren, Prüfstände

## Patentansprüche

1. Lineartilger mit variabler Federsteifigkeit zum Reduzieren oder Kompensieren von Schwingungen, welche von Maschinen oder Bauteilen erzeugt werden, bestehend im wesentlichen aus einem Befestigungselement (2), Befestigungsmitteln (5), einer oder mehreren Tilgermassen (1) und Federelementen (3), wobei Befestigungselement und Tilgermasse über mindestens ein Federelement miteinander verbunden sind, **dadurch gekennzeichnet, dass** die Flächen mit denen die Federelemente mit der Tilgermasse und dem Befestigungselement in Kontakt stehen, konusförmig oder sphärisch ausgebildet sind und einen Winkel (α) mit der Achse (a) des Tilgers bilden, wobei besagte Federelemente (3) durch Vorspannmittel (4) vorgespannt sind und somit eine auf das Schwingungssystem angepasste Federsteifigkeit besitzen.

2. Lineartilger nach Anspruch 1, **dadurch gekennzeichnet, dass** die Federelemente (3) Elastomerschichten sind.

3. Lineartilger nach Anspruch 1 oder 2, **dadurch gekennzeichnet, dass** der Winkel (α) 2° bis 45° beträgt zur Dämpfung von Schwingungen, welche im wesentlichen in Richtung der Achse (a) auftreten (Axialtilger).

4. Lineartilger nach Anspruch 3, **dadurch gekennzeichnet, dass** der Winkel (α) 10° bis 20° beträgt.

5. Lineartilger nach Anspruch 1 oder 2, **dadurch gekennzeichnet, dass** der Winkel (α) 45° bis 98° beträgt zur Dämpfung von Schwingungen, welche im wesentlichen senkrecht zur Achse (a) auftreten (Radialtilger).

6. Lineartilger nach Anspruch 5, **dadurch gekennzeichnet, dass** der Winkel (α) 80° bis 85° beträgt.

7. Lineartilger nach einem der Ansprüche 1 - 6 **dadurch gekennzeichnet, dass** die Flächen mit denen die Federelemente (3) mit der Tilgermasse (1) und dem Befestigungselement (2) in Kontakt stehen, konusförmig angeordnet sind.

8. Lineartilger nach Anspruch 7, **dadurch gekennzeichnet, dass** die Konstruktion des Tilgers so ausgeführt ist, dass die Konusöffnung zur Achse (a) hinweist.

9. Lineartilger nach einem der Ansprüche 1 - 8, **dadurch gekennzeichnet, dass** Befestigungselement (2) und Tilgermasse (1) zylindrisch geformte Teile sind.

10. Lineartilger nach einem der Ansprüche 1 - 9, **dadurch gekennzeichnet, dass** die Tilgermasse (1) hinter dem Befestigungselement (2) in Verlängerung der Achse (a) angebracht ist.

11. Lineartilger nach einem der Ansprüche 1 - 10, **dadurch gekennzeichnet, dass** die Tilgermasse (1) sowie die Federelemente (3) in Verlängerung des Befestigungselementes (2) senkrecht zur Achse (a) angebracht sind.

12. Stapel - Tilger, bestehend aus zwei oder mehreren in Richtung der Achse (a) hintereinander angeordneten gleich- oder verschiedenartigen Lineartilgern gemäß Anspruch 11.

13. Stapel - Tilger nach Anspruch 12, bestehend aus (i) Axialtilgern gemäß Anspruch 3, (ii) aus Radialtilgern gemäß Anspruch 5, oder (iii) in gemischter Weise aus entsprechenden Axial- und Radialtilgern.

14. Verwendung eines Lineartilgers gemäß einem der Ansprüche 1 - 13, zur Reduzierung oder Kompensierung von Schwingungen, die durch Getriebe oder Antriebsaggregate erzeugt werden.
